# EUROPÄISCHE PATENTSCHRIFT

(11) **EP 0 813 926 B1**
(45) Veröffentlichungstag und Bekanntmachung des Hinweises auf die Patenterteilung: **19.03.2003**
(21) Anmeldenummer: 97108982.6
(22) Anmeldetag: 04.06.1997
(51) Int. Cl.: B23C 5/20, B23C 5/10

(54) **Kopierfräser**
Milling cutter for copying
Fraise pour le copiage

(30) Priorität: 19.06.1996 DE 19624342
(43) Veröffentlichungstag der Anmeldung: 29.12.1997
(73) Patentinhaber: WALTER AG, 72072 Tübingen (DE)
(72) Erfinder: Fauser, Lothar, 72147 Nehren (DE); Bohnet, Siegfried, 72116 Mössingen (DE); Dürr, Hans Peter, 72810 Gomaringen (DE); Vötsch, Wolfgang, 72414 Rangendingen (DE)
(74) Vertreter: Patentanwälte Rüger, Barthelt & Abel

(56) Entgegenhaltungen:
- EP-A- 0 505 740
- DE-A- 3 807 119
- US-A- 4 527 930

## Beschreibung

Die Erfindung betrifft einen Schaftfräser mit bogenförmigen Schneidkanten im Stirnbereich, insbesondere einen Kugelfräser.

Fräswerkzeuge der genannten Bauart sind mit Wendeschneidplatten bestückt, die in ihrer Überdeckung wenigstens eine vollständige Schneide definieren, die von der Drehachse des Schneidwerkzeuges bis zu einem Endpunkt an seiner Außenumfangsfläche reicht. Die vollständige Schneidkante wird dabei von mehreren sich überlappenden Wendeschneidplatten gebildet, deren aktive Schneidkante jeweils einen Abschnitt der Schneide definiert. Aufgrund der Bogenform der Schneidkante im Stirnbereich des Fräswerkzeuges sind zur Bestückung desselben unterschiedliche Wendeschneidplatten erforderlich. Dies gilt insbesondere wegen des Axialversatzes der Schneidplatten, der notwendig ist, um eine Überdeckung zu erzielen.

Bspw. aus der DE 38 07 195 C2 ist ein Kugelstirnfräser bekannt, der im Stirnbereich zwei bezüglich der Drehachse um ungefähr 180° gegeneinander versetzte Plattensitze aufweist. An beiden Plattensitzen sind Wendeschneidplatten mit bogenförmigen Schneidkanten gehalten. Die beiden Wendeschneidplatten sind untereinander verschieden ausgebildet. Jede Schneidplatte ist jedoch symmetrisch bezüglich ihrer Befestigungsbohrung, so daß die Schneidplatte bei Verschleiß ihrer ersten Schneidkante an ihrem Plattensitz gewendet und somit mit ihrer zweiten Schneidkante weiter betrieben werden kann. Während die Schneidkante einer der beiden Schneidplatten bis zu der Drehachse reicht, endet die bogenförmige Schneidkante der anderen Schneidplatte in einem gewissen Abstand zu derselben. Umgekehrt weist die Wendeschneidplatte, deren Schneidkante die Drehachse nicht erreicht, einen geraden Schneidkantenabschnitt auf, der sich bis in den Mantelbereich des Fräswerkzeuges erstreckt.

Die zueinander passenden Wendeschneidplatten für die stirnseitigen Plattensitze haben unterschiedlich geformte Schneidkanten. In ihrer Form müssen sie dennoch aufeinander abgestimmt sein, was wenigstens in der Herstellung mit einem entsprechenden Aufwand verbunden ist.

Ein weiterer Kugelfräser ist aus der EP 0 361 435 B1 bekannt, bei dem ebenfalls sowohl im Schaft- als auch im Stirnbereich axial gegeneinander versetzte, radial einander gegenüberliegende Plattensitze vorgesehen sind. Die entsprechenden Wendeschneidplatten haben gerade oder bogenförmig ausgebildete Schneidkanten, wobei insgesamt drei unterschiedliche Wendeschneidplatten zum Einsatz kommen. Im Schaftbereich sind quadratische Schneidplatten vorgesehen, während im Stirnbereich zwei unterschiedliche Schneidplatten vorgesehen sind. Diese Wendeschneidplatten sind jeweils symmetrisch bezüglich ihrer etwa mittig angeordneten Befestigungsbohrung ausgebildet und weisen Schneidkanten auf, die einen bogenförmig ausgebildeten Abschnitt aufweisen. Die Schneidkanten an beiden einander gegenüberliegenden Seiten jeder Schneidplatte stimmen miteinander überein.

Symmetrisch ausgebildete Wendeschneidplatten mit zwei Schneidkanten, die jeweils einen bogenförmigen und einen sich daran anschließenden, in Draufsicht geraden Abschnitt aufweisen, sind aus der EP 0 504 608 B1 bekannt, die einen Kugelstirnfräser beschreibt. Dieser weist zwei einander radial gegenüberliegende Plattensitze auf, die axial gegeneinander versetzt sind. Der axial weiter vornliegende Plattensitz trägt eine Wendeschneidplatte mit bogenförmigen Schneidkanten, während der axial weiter.hinten angeordnete Plattensitz eine Wendeschneidplatte mit kurzen, bogenförmigen und sich daran anschließenden längeren, geraden Schneidkantenabschnitten trägt.

Auch hier sind aufeinander abgestimmte, unterschiedlich ausgebildete Wendeschneidplatten erforderlich. Die Schneidkanten der getrennt zu fertigenden Wendeschneidplatten müssen jedoch möglichst genau aufeinander abgestimmt sein, was die mit dem Fräswerkzeug erreichbare Bearbeitungsgenauigkeit beeinflußt.

Aus der Praxis ist darüber hinaus ein Kugelstirnfräser bekannt, der im Stirnbereich mit zwei gleich ausgebildeten, aber an zwei Plattensitzen unterschiedlich positionierten Dreieckplatten bestückt ist, die eine einzige Schneide definieren. Jede Dreieckplatte weist eine erste bogenförmige Schneidkante und eine zweite Schneidkante mit einem bogenförmigen Abschnitt und einem geraden Abschnitt aus. Eine dritte, relativ lange Kante ist unbenutzt.

Die Vorschubgeschwindigkeit muß darauf abgestimmt werden, daß lediglich eine vollständige Schneide vorhanden ist.

Davon ausgehend ist es Aufgabe der Erfindung, Schneidplatten sowie ein Fräswerkzeug zu schaffen, mit denen sich mit geringem oder vermindertem Herstellungsaufwand eine hohe Vorschubgeschwindigkeit erzielen läßt.

Diese Aufgabe wird mit einer Schneidplatte mit den Merkmalen des Patentanspruches 1 sowie mit einem Schneidwerkzeug mit den Merkmalen des Patentanspruches 18 gelöst.

Die beiden Schneidkanten einer Schneidplatte weisen jeweils einen bogenförmig ausgebildeten und einen sich daran anschließenden Abschnitt auf, der im eingebauten zustand in Umfangsrichtung in eine Längsmittelebene eines Werkzeuges projiziert eine Gerade ergibt. Die Abschnitte der Schneidkanten sind dabei so ausgebildet und an der zweieckigen Schneidplatte angeordnet, daß jede Schneidkante jeweils einem anderen Plattensitz zugeordnet werden kann und daß die zwischen den beiden Ecken definierten Kanten über ihre volle Länge als Schneidkanten dienen. Dies bedeutet, daß beide Plattensitze der Stirnseite des Fräswerkzeuges mit Schneidplatten eines einzigen Typs bestückt werden können. Während die Schneidplatte des ersten Plattensitzes mit ihrer ersten Schneidkante aktiv ist, ist die Schneidplatte des zweiten Plattensitzes mit ihrer abweichend ausgebildeten zweiten Schneidkante aktiv. Sind die Schneidkanten soweit verschlissen, daß die Schneidplatten zu wechseln sind, werden diese gewendet und auf dem jeweils anderen Plattensitz befestigt.

Die Schneidplatten müssen demnach beim Wenden auch umgesetzt und gemäß dem Winkel zwischen ihren Freiflächen (bzw. zwischen ihren gestreckten Schneidkanten) gedreht werden. Diese Maßnahme ermöglicht, daß beide Schneidkanten über ihre gesamte Länge und die Schneidplatte in zwei Schritten an ihrem gesamten Umfang benutzt wird.

Durch diese Maßnahme genügen zur Bestückung der stirnseitigen Plattensitze des Fräswerkzeuges Schneidplatten eines einzigen Typs, die in einer Charge hergestellt werden können. Dies ermöglicht eine signifikante Verminderung ansonsten erforderlicher Nacharbeit sowie der Lagerhaltung.

Infolge der unsymmetrischen Ausbildung der beiden Schneidkanten der Schneidplatte zueinander, insbesondere der unterschiedlichen Bogenlängen der bogenförmigen Abschnitte der Schneidkanten, kann die Schneidplatte eines Plattensitzes mit ihrer Schneidkante bis zu der Drehachse reichen oder diese schneiden, während die andere Schneidplatte mit ihrer Schneidkante einen Abstand zu der Drehachse einhält. Im Zentrumsbereich beträgt die Schneidenzahl demnach eins, während im übrigen gebogenen Bereich zwei vollständige Schneiden ausgebildet sind. Dies ermöglicht insbesondere in Radialrichtung eine Vorschubgeschwindigkeit, die gegenüber einschneidigen Werkzeugen um den Faktor zwei erhöht ist.

Die unterschiedlichen Längen der gerade ausgebildeten Schneidkantenabschnitte ermöglichen die Fortsetzung der Schneide mit weiteren, bspw. rechteckig, quadratisch oder dreieckig ausgebildeten, Schneidplatten, wobei bei zwei Schneidplattenreihen an dem Fräswerkzeug eine ausreichende Überdeckung der Schneidplatten erreicht wird.

Obwohl nicht zwingend erforderlich, schließen die beiden Schneidkanten der Schneidplatte in den Eckenbereichen aneinander an. Dies bspw. mit einem kleinen Radius, d.h. mit einer bogenförmigen Rundung.

Der spitze Winkel zwischen den gestreckten Abschnitten der Schneidkanten beträgt bspw. 11°. Damit wird eine schlanke Wendeschneidplatte mit langen Schneidkanten erhalten.

Die gestreckten Abschnitte der Schneidkanten können in Abhängigkeit von der vorgesehenen Einstellung in dem Werkzeug als Ellipsenbögen, Geraden, Polygonzüge oder ähnlich ausgebildet sein. Die Schneidkanten sind zwischen den beiden Ecken jedoch übergangslos ausgebildet, d.h. die Schneidkanten weisen keine Knicke auf (in jedem Punkt der Schneidkante ist nur genau eine Tangente definiert).

Die vorzugsweise mit einer etwa zentral angeordneten Befestigungsöffnung versehene Schneidplatte ist in diesem Bereich relativ dick ausgebildet, so daß die Befestigungsöffnung von einer gegenüber der übrigen Spanfläche erhabenen Planfläche umgeben ist. Dies erhöht die Stabilität der Schneidplatte.

Die sich an die Schneidkanten anschließenden Freiflächen sind vorzugsweise unterteilt, so daß im unmittelbaren Anschluß an die Schneidkanten zunächst ein kleinerer und in größerer Entfernung ein größerer Freiwinkel erreicht wird. Dies verbessert die Qualität der bearbeiteten Fläche und ermöglicht die Gestaltung von Fräswerkzeugen mit geringem Durchmesser, ohne daß dabei die Plattendicke der Schneidplatten übermäßig reduziert werden müßte.

Die Schneidplatten und das Schneidwerkzeug sind vorzugsweise mit formschlüssig wirkenden Mitteln zur Aufnahme von auf die Schneidplatten einwirkenden Axialkräften versehen. Dies können im Bereich der Anlagefläche vorgesehene Ausnehmungen und Vorsprünge sein. Eine besonders einfache und zuverlässige Variante ist jedoch eine in dem Eckenbereich der Schneidplatte angeordnete Anlagefläche, der eine entsprechende Anlagefläche an dem Plattensitz zugeordnet ist. Die Anlagefläche endet dabei in einem geringen Abstand zu der Schneidkante, die im Eckenbereich als Rundung mit geringem Radius ausgebildet sein kann. Durch den Abstand zwischen der Anlagefläche und der Schneidkante können größere Axialkräfte über den Eckenbereich der Schneidplatte abgeleitet werden, ohne die Schneidkante zu beschädigen.

Bei einer vorteilhaften Ausführungsform des Schneidwerkzeuges sind die den jeweiligen Plattensitzen zugeordneten Spanräume dem Verlauf der Schneidkanten der Schneidplatten angepaßt. Während die an dem jeweiligen Plattensitz gehaltenen Schneidplatten in der stirnseitigen Draufsicht jeweils als von dem Betrachter weglaufende Gerade erscheinen, ergibt sich mit radialer Blickrichtung auf die Schneidkante ein bogenförmiger Verlauf derselben. Dies gilt sowohl für die aktive, das heißt radial außenliegende, als auch für die passive, das heißt radial innenliegende, Schneidkante der jeweiligen Schneidplatte. Der an dem Fräswerkzeug ausgebildete Plattensitz weist Anlage- sowie Schutzflächen für die Freiflächen und Schneidkanten der jeweiligen Schneidplatte auf, die der Schneidplattenkontur folgen. Die Schutzflächen stehen über die Schneidkanten über und sind abgeschrägt. Dadurch wird bewirkt, daß ablaufende Späne die passive Schneidkante nicht beschädigen können. Diese ist dadurch geschützt.

Weitere Merkmale vorteilhafter Weiterbildungen insbesondere des Fräswerkzeuges sind Gegenstand von Unteransprüchen.

In der Zeichnung sind Ausführungsbeispiele der Erfindung dargestellt. Es zeigen:
- Fig. 1: einen im Stirnbereich mit asymmetrischen Schneidplatten bestückten Kopierfräser in schematisierter Darstellung mit einer Projektion der Schneidkanten in eine Längsmittelebene,
- Fig. 2a: das Fräswerkzeug nach Fig. 1 mit axialer Abstützung seiner Schneidplatten jeweils über eckseitig angeordnete Anlageflächen, in schematisierter, perspektivischer Darstellung,
- Fig. 2b, 2c: abgewandelte Ausführungsformen des Fräswerkzeuges nach den Fig. 1 und 2a, jeweils in schematisierter, perspektivischer Darstellung,
- Fig. 3a - 3c: das Fräswerkzeug nach Fig. 1 in Seiten- und Stirnansichten, in schematisierten Darstellungen zur Veranschaulichung der Einbaulage der Schneidplatten,
- Fig. 4: die Schneidplatte für die stirnseitigen Plattensitze in Draufsicht,
- Fig. 5: die Schneidplatte nach Fig. 4 in Draufsicht und in Seitenansichten, und
- Fig. 6: ein Fräswerkzeug nach einer der Fig. 1 und 2, mit einem in seiner Form der Schneidplattenform angepaßten Spanraum, in einer stark schematisierten Seitenansicht.

### Beschreibung

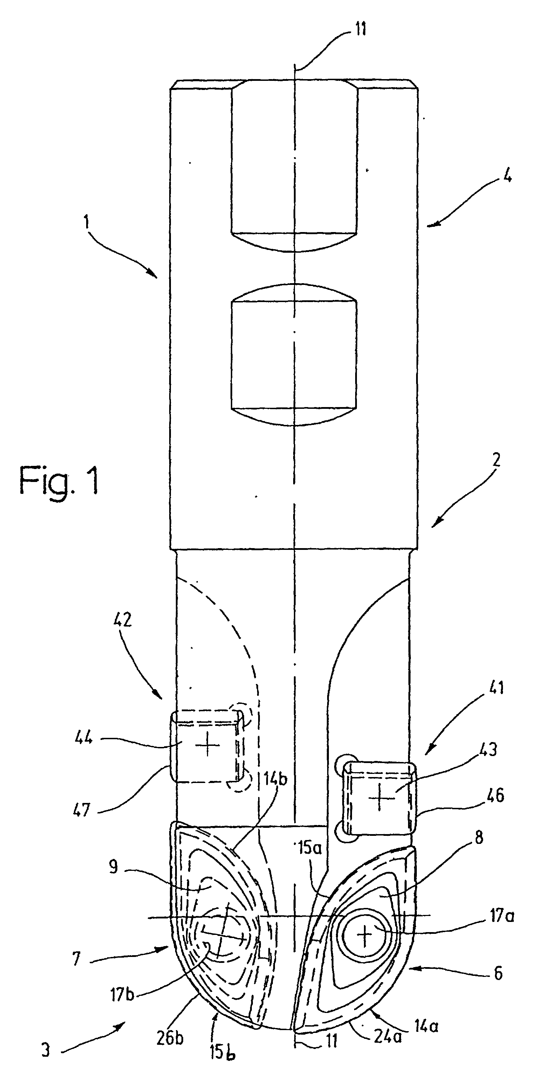

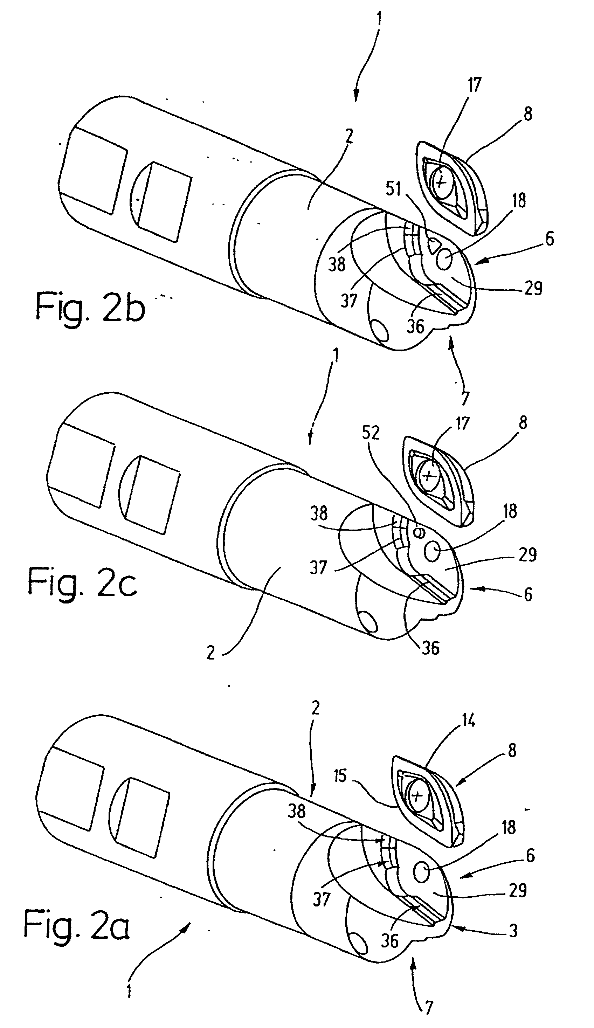

In Fig. 1 ist ein als Kopierfräser ausgebildetes Fräswerkzeug 1 veranschaulicht, dessen im wesentlichen zylindrischer Werkzeugkörper 2 an einem Ende 3 abgerundet ausgebildet ist, während sein gegenüberliegendes Ende 4 als Schaft zur Befestigung in einem geeigneten Futter ausgebildet ist. Das in leicht abgewandelter Form ebenfalls aus Fig. 2a ersichtliche Fräswerkzeug 1 weist zwei an dem Werkzeugkörper 2 stirnseitig, das heißt an dem Ende 3, ausgebildete Plattensitze 6, 7 auf, an denen jeweils eine Schneidplatte 8, 9 gehalten ist. Während sich der Plattensitz 6 bis zu einer mit der Längsmittelachse des Werkzeugkörpers 2 übereinstimmenden Drehachse 11 erstreckt, um die das Fräswerkzeug 1 in Gebrauch dreht, endet der Plattensitz 7 in einem gewissen Abstand von der Drehachse 11.

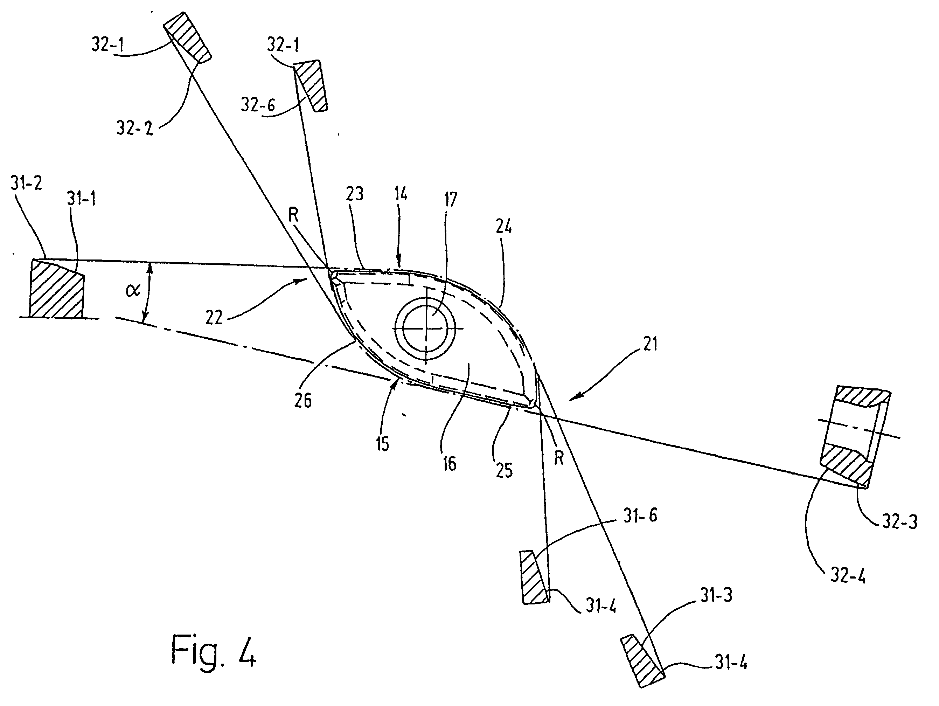

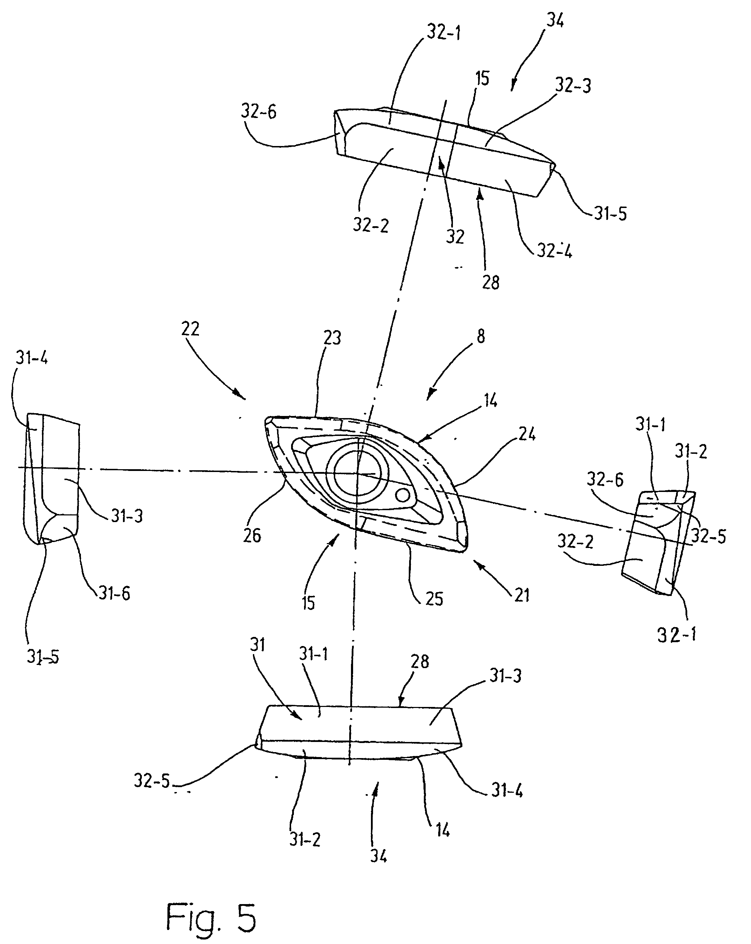

Die Schneidplatten 8, 9 sind von identischer Bauart und, wie aus den Fig. 4 und 5 hervorgeht, jeweils mit zwei unterschiedlich ausgebildeten Schneidkanten 14, 15 versehen. (Wegen der vollständigen Übereinstimmung der Schneidplatten 8, 9 miteinander wird im folgenden stellvertretend die Schneidplatte 8 beschrieben, wobei in Figuren, in denen beide Schneidplatten 8, 9 dargestellt sind, zur Unterscheidung von gleichen Kanten und Flächen der Schneidplatten 8, 9 Buchstabenindize a, b dienen.)

Die in Fig. 4 vereinfacht dargestellte Schneidplatte 8 ist eine zweieckige Schneidplatte mit plattenförmigem Grundkörper 16. Etwa mittig ist eine den Grundkörper 16 durchsetzende Befestigungsöffnung 17 vorgesehen, der eine bspw. aus Fig. 2a ersichtliche, an dem Plattensitz 6 angeordnete Gewindebohrung 18 zugeordnet ist. Die bezüglich der Befestigungsöffnung 17 asymmetrisch ausgebildeten Schneidkanten 14, 15 treffen sich an den beiden Ecken 21, 22 der Schneidplatte 8 und gehen dort mit einem relativ kleinen Radius R ineinander über, der kleiner als ein Millimeter sein kann. Infolge der asymmetrischen Gestaltung der Schneidplatte 8 definieren die Ecken 21, 22 eine Gerade, die im allgemeinen nicht durch den Mittelpunkt der Befestigungsöffnung 17 geht. Außerdem sind die Ecken 21, 22 unterschiedlich weit von der Befestigungsöffnung 17 entfernt.

In Draufsicht weist die Schneidkante 14 einen gestreckten, im wesentlichen gerade ausgebildeten Abschnitt 23 und einen bogenförmigen Abschnitt 24 auf. Ebenso ist die Schneidkante 15 in einen gestreckten, im wesentlichen gerade ausgebildeten Abschnitt 25 und einen bogenförmigen Abschnitt 26 unterteilt. Die gestreckten, im wesentlichen geraden Abschnitte 23, 25 der Schneidkanten 14, 15 können als schwach gekrümmte Ellipsenbögen, Geraden, Polygonzüge oder ähnlich ausgebildet sein. Sind die gestreckten Abschnitte 23, 25 aus wenigstens zwei Geradenstücken gebildet, schließen diese mit einem stumpfen Winkel von bspw. 2 bis 5° aneinander an. Eine gewissse Krümmung ist im Übergangsbereich möglich.

Bei beiden Schneidkanten 14, 15 geht der gerade Abschnitt 23, 25 knickfrei in den bogenförmigen Abschnitt 24, 26 über. Jedoch sind die geraden Abschnitte 23, 25 der beiden Schneidkanten 14, 15 unterschiedlich lang und stehen in einem spitzen Winkel α von bspw. 11° zueinander. Während der gerade Abschnitt 23 kürzer ist als der gerade Abschnitt 25, ist der bogenförmige Abschnitt 24 länger als der bogenförmige Abschnitt 26. Demnach definiert der Abschnitt 24 mit seinem Krümmungsmittelpunkt einen größeren Winkel als der Abschnitt 26. Die Radien der bogenförmigen Abschnitte 24, 26 stimmen miteinander im wesentlichen überein, jedoch können geringfügige Abweichungen erforderlich sein, um in Abhängigkeit von der Einbaulage eine übereinstimmende Fläche zu definieren. Wie aus Fig. 1 ersichtlich ist, ergänzen sich die bogenförmigen Abschnitte 24, 26 in Seitenansicht des Fräswerkzeuges 1 zu einem Halbkreis, der allenfalls bei der Drehachse 11 unterbrochen ist.

Wie aus Fig. 5 hervorgeht, weist die Schneidplatte 8 eine im wesentlichen ebene Grundfläche 28 auf, der eine ebenfalls plane, aus Fig. 2a ersichtliche Bodenfläche 29 des jeweiligen Plattensitzes 6 zugeordnet ist. Die zwischen Schneidkante 14 bzw. 15 und Grundfläche 28 ausgebildete Freifläche 31, 32 ist wenigstens einfach, vorzugsweise mehrfach, unterteilt. Die Neigung einzelner, so gebildeter planer Facetten 31-1 bis 31-6 und 32-1 bis 32-6 gegen die Grundfläche 28 ist aus Fig. 4 ersichtlich. Die Freiflächen 31, 32 sind dabei so unterteilt, daß weiter von der jeweiligen Schneidkante 14, 15 wegliegende Facetten 31-1, 31-3, 32-2, 32-4, 31-6, 32-6 stärker geneigt sind als näher an den Schneidkanten 14, 15 angeordnete Facetten. Insbesondere an die gestreckten Abschnitte 23, 25 der Schneidkanten 14, 15 anschließende Facetten 31-2, 32-3 sind plan ausgebildet und schließen, gemessen in einer zu der Grundfläche 28 oder der Spanfläche 34 im wesentlichen parallelen Ebene, miteinander einen spitzen Winkel α von ungefähr 11° ein.

Darüber hinaus dienen an den Ecken 21, 22 ausgebildete, vorzugsweise plane Facetten 31-6, 32-6 als Anlageflächen zur axialen Abstützung der Schneidplatte 8.

Die an der Oberseite der Schneidplatte 8 angeordnete Spanfläche 34 ist infolge der in Seitenansicht der Schneidplatte 8 ersichtlichen Krümmung der Schneidkanten 14, 15 gewölbt. In der Umgebung der Befestigungsöffnung 17 findet sich ein erhabener Abschnitt, der die Befestigungsöffnung 17 mit eine Planfläche umgibt.

Der der Schneidplatte 8 zugeordnete Plattensitz 6 ist gesondert aus Fig. 2a ersichtlich. An die Bodenfläche 29 schließen sich Anlageflächen 36, 37, 38 an, die entsprechend der Neigung der sich an die inaktive Schneidkante 15 anschließenden Freifläche 32 geneigt und unterteilt sind. Entsprechend sind die Anlageflächen des in Fig. 2a verdeckten Plattensitzes 7 gemäß der Freifläche 31 der Schneidplatte 9 ausgebildet. Dabei sind die abschnittsweise plan ausgebildeten Anlageflächen 38 beider Plattensitze 6, 7 im wesentlichen quer zu der Dreh- oder Längsmittelachse 11 des Werkzeugkörpers 2 orientiert und dienen der Anlage der Facetten 31-6, 32-6 der Schneidplatten 8, 9 und somit zur Aufnahme von auf die Schneidplatten 8, 9 einwirkenden Axialkräften. Beide Plattensitze 6, 7 sind mit Axialwinkeln von 0° und mit Radialwinkeln von ungefähr -5° ausgebildet.

In Fig. 2 weggelassen, jedoch aus Fig. 1 ersichtlich, gehören die Plattensitze 6, 7 jeweils zu einer Plattenreihe, die jeweils wenigstens einen weiteren Plattensitz 41, 42 zur Aufnahme rechteckiger Wendeschneidplatten 43, 44 mit gerade ausgebildeten Schneidkanten 46, 47 umfassen. Wie die Plattensitze 6, 7 sind auch die Plattensitze 41, 42 axial gegeneinander versetzt, so daß die Schneidkanten 14a, 46 einer Plattenreihe mit den Schneidkanten 15b, 47 der anderen Plattenreihe überlappen. Im Bereich des kugelförmigen Endes 3 des Fräswerkzeuges 1 beträgt die Schneidenzahl mit Ausnahme eines unmittelbar an die Drehachse 11 anschließenden Bereiches bis weit (mehr als fünf Millimeter) in den Mantelbereich hinein z = 2. Lediglich unmittelbar bei der Drehachse 11 beträgt die Schneidenzahl z = 1. Im Mantelbereich stehen die Wendeschneidplatten 43, 44 und Schneidplatten 8, 9 auf Lücke, so daß insgesamt wenigstens eine vollständige Schneide definiert ist.

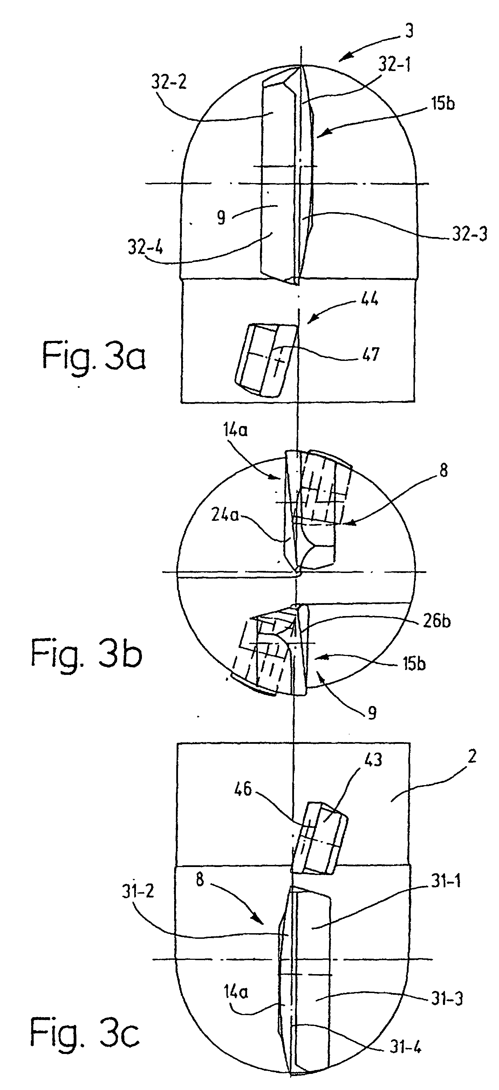

Während Fig. 1 eine Projektion der Schneidplatten 8, 9 und der Wendeschneidplatten 43, 44 in eine Längsebene veranschaulicht, ergibt sich die Einstellung der Schneidplatten 8, 9 und der Wendeschneidplatten 43, 44 und somit die Ausbildung der Plattensitze 6, 7, 41, 42 aus den Fig. 3a bis 3c. Die Schneidplatten 8, 9 sind, wie Fig. 3b zeigt, einander radial gegenüberliegend angeordnet, wobei der bogenförmige Abschnitt 24a der Schneidkante 14a (Schneidplatte 8) eine von dem Betrachter wegführende Gerade bildet, die die Drehachse 11 schneidet und von dieser weg verläuft. Der bogenförmige Abschnitt 26b der Schneidkante 15b liegt ebenfalls auf einer mit zunehmender Zentrumsferne von dem Betrachter wegführenden Geraden, die in der Projektion mit einer Radialen übereinstimmt. In Seitenansicht erscheint die Schneidkante 15b der Schneidplatte 9 jedoch gewölbt oder gebogen, wie Fig. 3a zeigt. Dabei geht die Schneidkante 15b von einem negativen zu einem positiven Axialwinkel über. In der Verlängerung der Schneidkante 15b ist die Schneidkante 47 der Wendeschneidplatte 44 mit etwa dem gleichen Axialwinkel angeordnet, wie er an dem von dem Ende 3 des Werkzeugkörpers 2 abliegenden Ende der Schneidkante 15b angetroffen wird.

Entsprechend stellt sich die Seitenansicht der Schneidplatte 8 in Fig. 3c dar. Die hier ebenfalls bogenförmig verlaufende Schneidkante 14a wechselt, ausgehend. von dem Ende 3 des Werkzeugkörpers 2, von einem negativen zu einem positiven Axialwinkel. Die Schneidkante 46 der folgenden Wendeschneidplatte 43 liegt in der Verlängerung der Schneidkante 14a.

In Gebrauch ist der Werkzeugkörper 2 des Fräswerkzeuges 1 mit insgesamt zwei unterschiedlichen Wendeschneidplattentypen bestückt: den Schneidplatten 8, 9, die untereinander identisch sind, und den Wendeschneidplatten 43, 44, die ebenfalls untereinander identisch sind. Während die Wendeschneidplatten 43, 44 echte Wendeplatten sind, das heißt bei Verschleiß einer Schneidkante an ihrem jeweiligen Plattensitz 41, 42 gewendet werden können, werden die Schneidplatten 8, 9 in diesem Falle umgesetzt, das heißt, sie tauschen beim Wenden zusätzlich ihre Plätze. Die Bestückung des Werkzeugkörpers 2 mit einheitlichen Schneidplatten im Bereich seines abgerundeten Endes 3 ermöglicht es, die Schneidplatten 8, 9 ein und derselben Fertigung zu entnehmen. Damit wirken sich insbesondere zwischen Chargen auftretende Toleranzen auf die Genauigkeit des Fräswerkzeuges 1 nicht aus und es kann weitgehend auf Nachbearbeitungsvorgänge verzichtet werden. Insbesondere brauchen die Schneidkanten 14, 15 nicht geschliffen zu werden.

Aus Fig. 2b ergibt sich eine erweiterte Ausführungsform, bei der in Ersatz für die als Anlagefläche dienenden Facetten 31-6, 32-6 oder in Ergänzung dazu an dem jeweiligen Plattensitz 6, 7 formschlüssige Kupplungsmittel zur Aufnahme von Axialkräften ausgebildet sind. Bei dem in Fig. 2b veranschaulichten Ausführungsbeispiel ist dies ein sich über die Bodenfläche 29 des Plattensitzes 6 erhebender, mit dem Werkzeugkörper 2 einstückig ausgebildeter Vorsprung 51, dem eine entsprechende, nicht weiter dargestellte Ausnehmung in der Grundfläche 28 der Schneidplatte 8 zugeordnet ist. Symmetrisch zu der Befestigungsöffnung 17 der Schneidplatte 8 ist eine weitere solche Ausnehmung vorgesehen, die mit einem entsprechenden, nicht weiter veranschaulichten Vorsprung des Plattensitzes 7 zusammenwirkt.

Wie aus Fig. 2c ersichtlich, kann anstelle des einstückig an der Bodenfläche 29 ausgebildeten Vorsprunges 51 ein Stift 52 vorgesehen sein, der der Gewindebohrung 18 benachbart über die Bodenfläche 29 ragt.

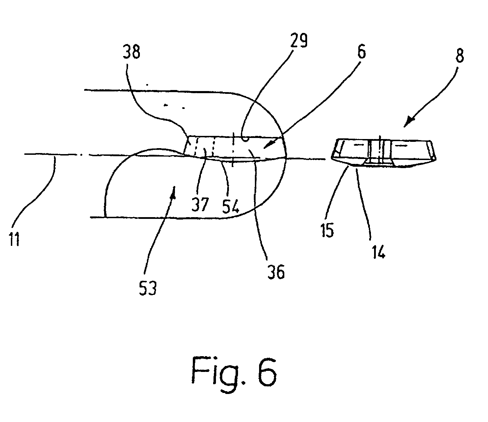

Eine weitere Verbesserung des Fräswerkzeuges 1 ergibt sich, wenn seine Spanräume 53 wie in Fig. 6 dargestellt ausgebildet sind. Gegenüber der ebenen und parallel zu der Drehachse 11 ausgerichteten Bodenfläche 29 des Plattensitzes 6 folgen die Anlageflächen 36, 37 sowie gegebenenfalls die Anlagefläche 38 mit ihrer Oberkante 54 der inaktiven, das heißt zu der Drehachse 11 hin weisenden, Schneidkante 15 der Schneidplatte 8. Damit ist die Schneidkante 15 in dem Plattensitz 6 gegen ablaufende Späne geschützt, die sich nicht zwischen Schneidkante 15 und sonstigen Wänden des Spanraumes verklemmen können. Der Plattensitz 7 ist entsprechend ausgebildet.

Ein insbesondere als Kopierfräser dienendes Fräswerkzeug 1 weist an seinem abgerundeten Ende zwei einander diametral gegenüberliegende Plattensitze auf, die zur Aufnahme asymmetrischer Schneidplatten 8, 9 eingerichtet sind. Die untereinander völlig übereinstimmenden Schneidplatten 8, 9 sind Zweieckplatten und weisen jeweils zwei Schneidkanten 14, 15 auf. Die erste Schneidkante 14 weist einen längeren bogenförmigen Abschnitt 24 und einen kürzeren geraden Abschnitt 23 auf, während die andere Schneidkante 15 demgegenüber einen kürzeren bogenförmigen Abschnitt 26 und einen längeren geraden Abschnitt 25 aufweist. Dabei ist die erste Schneidkante 14 so geformt, daß sie auf einer in einen Zylinder übergehenden Kugelfläche liegt, wenn die betreffende Schneidplatte 8 an dem ersten Plattensitz 6 mit der betreffenden Schneidkante in Aktivposition montiert ist. Umgekehrt liegt die andere Schneidkante auf der genannten, in einen Zylinder übergehenden Kugelfläche, wenn dieselbe Schneidplatte an dem anderen Plattensitz 7 montiert ist.

## Patentansprüche

1. Schneidplatte (8), insbesondere für Kugelstirnfräser (1) und Kopierfräser,
mit einem einstückig ausgebildeten plattenförmigen Grundkörper (16) mit zweieckigem Umriß, der eine im wesentlichen ebene Grundfläche (28) und eine an seiner Gegenseite ausgebildete Spanfläche (34) aufweist, die mit seitlichen Freiflächen (31, 32) eine erste und eine zweite Schneidkante (14, 15) definieren, die auf zwei Seiten einer zwei Eckenbereiche (21, 22) miteinander verbindenden Geraden angeordnet sind, wobei jede Schneidkante (14, 15) wenigstens einen bogenförmigen Abschnitt (24, 26) und einen daran anschließenden weiteren Abschnitt (23, 25) aufweist,
**dadurch gekennzeichnet,**
**daß** der bogenförmige Abschnitt (24) der ersten Schneidkante (14) und der bogenförmige Abschnitt (26) der zweiten Schneidkante (15) eine unterschiedliche Länge aufweisen und
**daß** die Freiflächen (31, 32) jeweils einen an den weiteren Abschnitt (23, 25) grenzenden Bereich (31-2, 32-3) aufweisen, die in einer mit der Grundfläche (28) im wesentlichen parallelen Ebene miteinander einen spitzen, von Null verschiedenen Winkel (α) einschließen.

2. Schneidplatte nach Anspruch 1, **dadurch gekennzeichnet, daß** die bogenförmigen Abschnitte (24, 26) und die sich daran anschließenden weiteren Abschnitte (23, 25) der Schneidkanten (14, 15) übergangslos ineinander übergehen.

3. Schneidplatte nach Anspruch 1, **dadurch gekennzeichnet, daß** sich der bogenförmige Abschnitt (24) der ersten Schneidkante (14) bezüglich ihres Krümmungsmittelpunktes über einen ersten Winkelbereich erstreckt, daß sich der bogenförmige Abschnitt (26) der zweiten Schneidkante (15) bezüglich ihres Krümmungsmittelpunktes über einen zweiten Winkelbereich erstreckt und daß die beiden Winkelbereiche unterschiedlich groß sind.

4. Schneidplatte nach Anspruch 1, **dadurch gekennzeichnet, daß** die erste und die zweite Schneidkante (14, 15) in beiden Eckbereichen (21, 22) jeweils aneinander anschließen.

5. Schneidplatte nach Anspruch 4, **dadurch gekennzeichnet, daß** die Schneidkanten (14, 15) in den Eckenbereichen (21, 22) jeweils bogenförmig mit einer Rundung (R) aneinander anschließen.

6. Schneidplatte nach Anspruch 1, **dadurch gekennzeichnet, daß** der weitere Abschnitt (23) der ersten Schneidkante (14) und der weitere Abschnitt (25) der zweiten Schneidkante (15) gestreckt ausgebildet sind.

7. Schneidplatte nach Anspruch 6, **dadurch gekennzeichnet, daß** daß der gestreckte Abschnitt (23) der ersten Schneidkante (14) eine Länge aufweist, die von der Länge des gestreckten Abschnitts (25) der zweiten Schneidkante (15) verschieden ist.

8. Schneidplatte nach Anspruch 6, **dadurch gekennzeichnet, daß** die weiteren Abschnitte (23, 25) wenigstens einen im wesentlichen gerade ausgebildeten Abschnitt enthalten.

9. Schneidplatte nach Anspruch 8, **dadurch gekennzeichnet, daß** die weiteren Abschnitte (23, 25) jeweils wenigstens zwei übergangslos aneinander anschließende Geradenabschnitte enthalten.

10. Schneidplatte nach Anspruch 6, **dadurch gekennzeichnet, daß** die gestreckt ausgebildeten Abschnitte (23, 25) miteinander einen über ihre Länge im wesentlichen konstanten, von Null verschiedenen spitzen Winkel (α) einschließen.

11. Schneidplatte nach Anspruch 1 oder 6, **dadurch gekennzeichnet, daß** der Winkel (α) in dem Bereich von 5° bis 20° liegt.

12. Schneidplatte nach Anspruch 1, **dadurch gekennzeichnet, daß** die Schneidplatte (8) eine Durchgangsöffnung (17) zur Befestigung an einem Plattensitz (6) eines Fräswerkzeuges (1) aufweist, wobei an der Spanfläche (34) im Bereich der Durchgangsöffnung (17) ein ebener Flächenabschnitt ausgebildet ist.

13. Schneidplatte nach Anspruch 1, **dadurch gekennzeichnet, daß** die sich an die Schneidkante (14, 15) anschließende Freifläche (31, 32) in Freiflächenbereiche (31-1 bis 31-6, 32-1 bis 32-6) unterteilt ist, die unterschiedliche Freiwinkel definieren.

14. Schneidplatte nach Anspruch 1, **dadurch gekennzeichnet, daß** in dem Eckenbereich (21, 22) eine im wesentlichen quer zu der Verbindungslinie gerichtete Anlagefläche (31-6, 32-6) ausgebildet ist, die der Ableitung von auf die Schneidplatte (8) einwirkendem Axialschub auf eine entsprechende Anlagefläche (38) eines Plattensitzes (6) dient.

15. Schneidplatte nach Anspruch 14, **dadurch gekennzeichnet, daß** die in dem Eckenbereich (21, 22) angeordnete Anlagefläche (31-6, 32-6) von der Schneidkante (14, 15) beabstandet ist.

16. Schneidplatte nach Anspruch 1, **dadurch gekennzeichnet, daß** in dem Grundkörper (16) an der Grundfläche (28) wenigstens eine Ausnehmung zur Aufnahme eines an dem Plattensitz (6) eines Werkzeugkörpers (2) ausgebildeten Vorsprunges (51, 52) vorgesehen ist.

17. Fräswerkzeug (1), insbesondere Kugelstirnfräser oder Kopierfräser,
mit einem in Gebrauch um eine Längsachse (11) zu drehenden Werkzeugkörper (2), der an seinem stirnseitigen Ende (3) wenigstens einen ersten und einen zweiten Plattensitz (6, 7) aufweist,
**dadurch gekennzeichnet,**
**daß** die beiden Plattensitze (6, 7) jeweils eine Schneidplatte (8, 9) nach wenigstens einem der Ansprüche 1 bis 16 aufnehmen,
wobei der erste Plattensitz (6) derart ausgebildet ist, daß die an ihm gehaltene Schneidplatte (8) mit ihrer ersten Schneidkante (14) aktiv ist, und
wobei der zweite Plattensitz (7) derart ausgebildet ist, daß die an ihm gehaltene Schneidplatte (9) mit ihrer zweiten Schneidkante (15) aktiv ist.

18. Fräswerkzeug nach Anspruch 17, **dadurch gekennzeichnet, daß** die Schneidplatte (8) des ersten Plattensitzes (6) bei Drehung des Fräswerkzeuges (1) um seine Längsachse (11) mit ihrer ersten Schneidkante (14) eine Umlauffigur definiert, die wenigstens in einem Bereich mit der Umlauffigur übereinstimmt, die von der zweiten Schneidkante (15) der an dem zweiten Plattensitz (7) gehaltenen Schneidplatte (9) erzeugt ist.

19. Fräswerkzeug nach Anspruch 17, **dadurch gekennzeichnet, daß** die Plattensitze (6, 7) derart ausgebildet sind, daß die Schneidplatte (8, 9) mit dem längeren bogenförmigen Schneidkantenabschnitt (24) die mit der Drehachse übereinstimmende Längsachse (11) des Fräswerkzeuges (1) wenigstens erreicht, während die Schneidkante (15) der anderen Schneidplatte (9) in einem Abstand zu der Drehachse (11) endet.

20. Fräswerkzeug nach Anspruch 17, **dadurch gekennzeichnet, daß** die von den beiden Schneidkanten (14, 15) der Schneidplatten (8, 9) definierte Schneidenzahl mit Ausnahme eines sich unmittelbar an die Drehachse (11) anschließenden Bereiches und mit Ausnahme eines Übergangsbereiches zu Umfangsschneidplatten zwei ist.

21. Fräswerkzeug nach Anspruch 17, **dadurch gekennzeichnet, daß** an dem Plattensitz (6) ein Vorsprung (51) zur formschlüssigen Aufnahme von auf die Schneidplatte (8) ausgeübten Axialkräften ausgebildet ist.

22. Fräswerkzeug nach Anspruch 17, **dadurch gekennzeichnet, daß** an dem Plattensitz (6) eine Anlagefläche (38) zur Abstützung der Anlagefläche (31-6, 32-6) der Schneidplatte (8) nach Anspruch 14 ausgebildet ist.

23. Fräswerkzeug nach Anspruch 17, **dadurch gekennzeichnet, daß** der Plattensitz (6) zum seitlichen Abstützen der Schneidplatte (8) eine Anlagefläche (36, 37) aufweist, deren spanraumseitige Oberkante (54) mit der inaktiven Schneidkante (15) der an dem Plattensitz (6) gehaltenen Schneidplatte (8) im wesentlichen übereinstimmt.

24. Fräswerkzeug nach Anspruch 17, **dadurch gekennzeichnet, daß** im Anschluß an die beiden Plattensitze (6, 7) jeweils wenigstens ein weiterer Plattensitz (41, 42) zur Aufnahme jeweils einer Wendeschneidplatte (43, 44) mit einer geraden Schneidkante (46, 47) vorgesehen ist.

25. Fräswerkzeug nach Anspruch 24, **dadurch gekennzeichnet, daß** die weiteren Plattensitze (41, 42) axial gegeneinander versetzt sind.

## Claims

1. Cutting blade (8), in particular for ball-type face milling cutters (1) and copy milling cutters,
with a plate-shaped base body (16), which is constructed in one piece, has a two-cornered contour and an essentially plane base (28), and has a rake face (34) constructed on its opposite side which with lateral relief flanks (31, 32) defines a first and a second cutting edge (14, 15), which are disposed on two sides of a straight line connecting two corner regions (21, 22) to one another, wherein each cutting edge (14, 15) has at least one arc-shaped section (24, 26) and an additional section (23, 25) adjoining it,
**characterised in that**
the arc-shaped section (24) of the first cutting edge (14) and the arc-shaped section (26) of the second cutting edge (15) have different lengths, and
that the relief flanks (31, 32) respectively have a region (31-2, 32-3) adjoining the additional section (23, 25),
these together regions enclosing an acute angle (α) other than zero in a plane essentially parallel to the base (28).

2. Cutting blade according to Claim 1, **characterised in that** the arc-shaped sections (24, 26) and the additional sections (23, 25) of the cutting edges (14, 15) adjoining them merge into one another without any transition.

3. Cutting blade according to Claim 1, **characterised in that** the arc-shaped section (24) of the first cutting edge (14) extends over a first angle region in relation to its centre of curvature, that the arc-shaped section (26) of the second cutting edge (15) extends over a second angle region in relation to its centre of curvature and that the two angle regions are of different size.

4. Cutting blade according to Claim 1, **characterised in that** the first and the second cutting edges (14, 15) adjoin one another respectively in the two corner regions (21, 22).

5. Cutting blade according to Claim 4, **characterised in that** the cutting edges (14, 15) adjoin one another respectively in the corner regions (21, 22) in an arc shape with a curve (R).

6. Cutting blade according to Claim 1, **characterised in that** the additional section (23) of the first cutting edge (14) and the additional section (25) of the second cutting edge (15) are elongated.

7. Cutting blade according to Claim 6, **characterised in that** the elongated section (23) of the first cutting edge (14) differs in length from the length of the elongated section (25) of the second cutting edge (15).

8. Cutting blade according to Claim 6, **characterised in that** the additional sections (23, 25) contain at least one essentially straight section.

9. Cutting blade according to Claim 8, **characterised in that** the additional sections (23, 25) respectively contain at least two straight sections adjoining one another without any transition.

10. Cutting blade according to Claim 6, **characterised in that** the elongated sections (23, 25) together enclose an acute angle (α) other than zero, which is essentially constant over their length.

11. Cutting blade according to Claim 1 or 6, **characterised in that** the angle (α) lies in the range of 5° to 20°.

12. Cutting blade according to Claim 1, **characterised in that** the cutting blade (8) has a passage (17) for fastening a milling cutter (1) to a blade seat (6), wherein a plane surface section is constructed on the rake face (34) in the region of the passage (17).

13. Cutting blade according to Claim 1, **characterised in that** the relief flank (31, 32) adjoining the cutting edge (14, 15) is divided into relief flank regions (31-1 to 31-6, 32-1 to 32-6) which define different relief angles.

14. Cutting blade according to Claim 1, **characterised in that** in the corner region (21, 22) an abutment face (31-6, 32-6) directed essentially transversely to the connecting line is provided, which serves to deflect axial thrust acting on the cutting blade (8) onto a corresponding abutment face (38) of a blade seat (6).

15. Cutting blade according to Claim 14, **characterised in that** the abutment face (31-6, 32-6) disposed in the corner region (21, 22) is spaced from the cutting edge (14, 15).

16. Cutting blade according to Claim 1, **characterised in that** at least one recess is provided in the base body (16) on the base (28) to receive a projection (51, 52) constructed on the blade seat (6) of a tool body (2).

17. Milling cutter (1), in particular a ball-type face milling cutter or copy milling cutter,
with a tool body (2) to be rotated around a longitudinal axis (11) during use, which has at least a first and a second blade seat (6, 7) at its face end (3),
**characterised in that**
the two blade seats (6, 7) respectively receive a cutting blade (8, 9) according to at least one of Claims 1 to 16, wherein the first blade seat (6) is configured such that the cutting blade (8) held thereon is active with its first cutting edge (14), and
wherein the second blade seat (7) is configured such that the cutting blade (9) held thereon is active with its second cutting edge (15).

18. Milling cutter according to Claim 17, **characterised in that** upon rotation of the milling cutter (1) around its longitudinal axis (11), the cutting blade (8) of the first blade seat (6) defines with its first cutting edge (14) a rotational shape which at least in one region corresponds to the rotational shape generated by the second cutting edge (15) of the cutting blade (9) held on the second blade seat (7).

19. Milling cutter according to Claim 17, **characterised in that** the blade seats (6, 7) are configured such that the cutting blade (8, 9) with the longer arc-shaped cutting edge section (24) at least reaches the longitudinal axis (11) of the milling cutter (1) corresponding to the rotational axis, while the cutting edge (15) of the other cutting blade (9) terminates at a distance from the rotational axis (11).

20. Milling cutter according to Claim 17, **characterised in that** the cutter number defined by the two cutting edges (14, 15) of the cutting blades (8, 9) except for a region directly adjoining the rotational axis (11) and except for of a transition region to the peripheral cutting blades is two.

21. Milling cutter according to Claim 17, **characterised in that** a projection (51) is constructed on the blade seat (6) for the positive absorption of axial forces exerted on the cutting blade (8).

22. Milling cutter according to Claim 17, **characterised in that** an abutment face (38) is constructed on the blade seat (6) to support the abutment face (31-6, 32-6) of the cutting blade (8) according to Claim 14.

23. Milling cutter according to Claim 17, **characterised in that** for lateral support of the cutting blade (8), the blade seat (6) has an abutment face (36, 37), the upper edge (54) on which on the rake area side essentially corresponds to the inactive cutting edge (15) of the cutting blade (8) held on the blade seat (6).

24. Milling cutter according to Claim 17, **characterised in that** at least one further blade seat (41, 42) is respectively provided adjoining the two blade seats (6, 7) to receive a respective reversible cutting blade (43, 44) with a straight cutting edge (46, 47).

25. Milling cutter according to Claim 24, **characterised in that** the further blade seats (41, 42) are axially displaced relative to one another.

## Revendications

1. Plaquette de coupe (8), en particulier pour des fraises en bout sphériques (1) ou des fraises à copier,
avec un corps de base (16) monobloc, en forme de plaque, avec un contour à deux angles, qui présente une surface de base (28) essentiellement plane ainsi qu'une surface de coupe (34) aménagée sur sa face opposée qui, avec des faces de dépouille (31, 32) latérales, définit une première et une deuxième arête de coupe (14, 15), qui sont disposées de deux côtés d'une droite joignant les deux zones d'angle (21, 22), chaque arête de coupe (14, 15) présentant au moins une portion (24, 26) arquée et une portion supplémentaire (23, 25) contiguë,
**caractérisée**
**en ce que** la portion (24) arquée de la première arête de coupe (14) et la portion (26) arquée de la deuxième arête de coupe (15) ont des longueurs différentes,
**en ce que** les surfaces de dépouille (31, 32) présentent chacune une zone (31-2, 32-3) contiguë à la portion supplémentaire (23, 25) qui, dans un plan essentiellement parallèle à la surface de base (28), forment entre elles un angle aigu (α) différent de zéro.

2. Plaquette de coupe selon la revendication1, **caractérisée en ce que** les portions (24, 26) arquées et les portions supplémentaires (23, 25) contiguës des arêtes de coupe (14, 15) se raccordent de manière progressive.

3. Plaquette de coupe selon la revendication1, **caractérisée en ce que** la portion (24) arquée de la première arête de coupe (14), en ce qui concerne son centre de courbure, s'étend sur une première zone angulaire, **en ce que** la portion (26) arquée de la deuxième arête de coupe (15), en ce qui concerne son centre de courbure, s'étend sur une deuxième zone angulaire, et **en ce que** les deux zones angulaires ont des dimensions différentes.

4. Plaquette de coupe selon la revendication 1, **caractérisée en ce que** la première et la deuxième arête de coupe (14, 15), dans les deux zones d'angle (21, 22), se raccordent l'une à l'autre.

5. Plaquette de coupe selon la revendication 4, **caractérisée en ce que** les arêtes de coupe (14, 15), dans les zone d'angle (21, 22), se raccordent l'une à l'autre avec un arrondi (R).

6. Plaquette de coupe selon la revendication 1, **caractérisée en ce que** la portion supplémentaire (23) de la première arête de coupe (14) et la portion supplémentaire (25) de la deuxième arête de coupe (15) sont planes.

7. Plaquette de coupe selon la revendication 6, **caractérisée en ce que** la portion plane (23) de la première arête de coupe (14) présente une longueur qui est différente de la longueur de la portion plane (25) de la deuxième arête de coupe (15)

8. Plaquette de coupe selon la revendication 6, **caractérisée en ce que** les portions supplémentaires (23, 25) comprennent au moins une portion essentiellement droite.

9. Plaquette de coupe selon la revendication 8, **caractérisée en ce que** les portions supplémentaires (23, 25) comprennent chacune au moins deux portions de droite qui se raccordent de manière progressive.

10. Plaquette de coupe selon la revendication 6, **caractérisée en ce que** les portions supplémentaires (23, 25) planes forment entre elles un angle (α) aigu, différent de zéro, essentiellement constant sur leur longueur.

11. Plaquette de coupe selon la revendication 1 ou 6, **caractérisée en ce que** l'angle (α) est compris dans la plage allant de 5° à 20°.

12. Plaquette de coupe selon la revendication 1, **caractérisée en ce que** la plaquette de coupe (8) comporte un trou débouchant (17) pour la fixation sur un siège de plaquette (6) d'une fraise (1), une portion de surface plane étant aménagée sur la face de coupe (34), dans la région du trou débouchant (17).

13. Plaquette de coupe selon la revendication 1, **caractérisée en ce que** la face de dépouille (31, 32) qui fait suite à l'arête de coupe (14, 15) est divisée en zones (31-1 à 31-6, 32-1 à 32-6) qui définissent des angles de dépouille différents.

14. Plaquette de coupe selon la revendication 1, **caractérisée en ce que** dans la zone d'angle (21, 22) est aménagée une surface d'appui (31-6, 32-6) orientée essentiellement transversalement à la ligne de liaison, qui assure le report de la poussée axiale s'exerçant sur la plaquette de coupe (8) sur une surface d'appui (38) correspondante d'un siège de plaquette (6).

15. Plaquette de coupe selon la revendication 14, **caractérisée en ce que** la surface d'appui (31-6, 32-6) disposée dans la zone d'angle (21, 22) est éloignée de l'arête de coupe (14, 15).

16. Plaquette de coupe selon la revendication 1, **caractérisée en ce qu'**il est prévu dans le corps de base (16), dans la surface de base (28), au moins une échancrure pour recevoir une saillie (51, 52) aménagée sur le siège de plaquette (6) d'un corps d'outils (2).

17. Outil de fraisage (1), en particulier fraise en bout sphérique (1) ou fraise à copier,
avec un corps d'outil (2), qui en utilisation tourne autour d'un axe longitudinal (11) et présente à son extrémité frontale (3) au moins un premier et un deuxième sièges de plaquettes (6, 7),
**caractérisé**
**en ce que** les deux sièges de plaquettes (6, 7) reçoivent chacun une plaquette de coupe (8, 9) selon au moins une des revendications 1 à 16),
le premier siège de plaquette (6) étant conformé de telle sorte que la plaquette de coupe (8) fixée sur celui-ci soit active avec sa première arête de coupe (14) et
le deuxième siège de plaquette (7) étant conformé de telle sorte que la plaquette de coupe (9) fixée sur celui-ci soit active avec sa deuxième arête de coupe (15).

18. Outil de fraisage selon la revendication 17, **caractérisé en ce que** la plaquette de coupe (8) du premier siège de plaquette (6), lors de la rotation de l'outil de fraisage (1) autour de son axe longitudinal (11), définit avec sa première arête de coupe (14) une figure de révolution qui, dans une zone au moins, correspond à la figure de révolution produite par la deuxième arête de coupe (15) de la plaquette de coupe (9) fixée sur le deuxième siège de plaquette (7).

19. Outil de fraisage selon la revendication 17, **caractérisé en ce que** les sièges de plaquettes (6, 7) sont conformés de telle sorte que la plaquette de coupe (8, 9) avec sa portion d'arête de coupe (24) arquée plus longue atteigne au moins l'axe longitudinal (11) de l'outil de fraisage (1), qui coïncide avec l'axe de rotation, tandis que l'arête de coupe (15) de l'autre plaquette de coupe (9) se termine à une certaine distance de l'axe de rotation (11).

20. Outil de fraisage selon la revendication 17, **caractérisé en ce que** le nombre de taillants définis par les deux arêtes de coupe (14, 15) des plaquettes de coupe (8, 9), à l'exception d'une zone consécutive à l'axe de rotation (11) et à l'exception d'une zone de raccordement à des plaquettes de coupe périphériques, est de deux.

21. Outil de fraisage selon la revendication 17, **caractérisé en ce qu'**une saillie (51) est aménagée sur le siège de plaquette (6) aux fins de supporter par complémentarité de formes les efforts axiaux exercés sur la plaquette de coupe (8).

22. Outil de fraisage selon la revendication 17, **caractérisé en ce qu'**une surface d'appui (38) est aménagée sur le siège de plaquette (6) pour l'appui de la surface d'appui (31-6, 32-6) de la plaquette de coupe (8), conformément à la revendication 14.

23. Outil de fraisage selon la revendication 17, **caractérisé en ce que** le siège de plaquette (6), pour l'appui latéral de la plaquette de coupe (8), présente au moins une surface d'appui (36, 37), dont l'arête supérieure (54) côté espace à copeau, coïncide essentiellement avec l'arête de coupe (15) inactive de la plaquette de coupe (8) fixée sur le siège de plaquette (6).

24. Outil de fraisage selon la revendication 17, **caractérisé en ce qu'**il est prévu à la suite des deux sièges de plaquette (6, 7) au moins un siège de plaquette (41, 42) supplémentaire pour recevoir une plaquette amovible (43, 44) avec une arête de coupe (46, 47) droite.

25. Outil de fraisage selon la revendication 24, **caractérisé en ce que** les sièges de plaquette (41, 42) supplémentaires sont mutuellement décalés dans la direction axiale.
